# EUROPEAN PATENT SPECIFICATION

(11) **EP 3 718 330 B1**
(45) Date of publication and mention of the grant of the patent: **25.09.2024**
(21) Application number: 17933235.8
(22) Date of filing: 29.11.2017
(51) Int. Cl.: H04W 12/04, H04W 12/06, H04W 12/65, H04W 12/69, H04W 4/44, H04W 36/08

(54) **SESSION KEY ESTABLISHMENT**
SITZUNGSSCHLÜSSELAUFBAU
CRÉATION DE CLÉ DE SESSION

(43) Date of publication of application: 07.10.2020
(73) Proprietor: Telefonaktiebolaget LM Ericsson (publ), 164 83 Stockholm (SE)
(72) Inventor: SMEETS, Bernard, 247 51 Dalby (SE); ENGLUND, Håkan, 226 48 Lund (SE); STÅHL, Per, 218 51 Klagshamn (SE)
(74) Representative: Ericsson
(86) International application number: PCT/SE2017/051190
(87) International publication number: WO 2019/108100

(56) References cited:
- WO-A1-2006/113206
- WO-A1-2013/064716
- WO-A1-2014/067543
- WO-A1-2017/028901
- WO-A2-2007/063420
- KORHONEN JOUNI: "Applying Generic Bootstrapping Architecture for use with Constrained Devices", 1 January 2012 (2012-01-01), XP055795182, Retrieved from the Internet <URL:http://www.lix.polytechnique.fr/hipercom/SmartObjectSecurity/papers/JouniKorhonen.pdf> [retrieved on 20210414]
- MOTLAGH NASER HOSSEIN ET AL: "UAV-Based IoT Platform: A Crowd Surveillance Use Case", IEEE COMMUNICATIONS MAGAZINE, IEEE SERVICE CENTER, PISCATAWAY, US, vol. 55, no. 2, 1 February 2017 (2017-02-01), pages 128 - 134, XP011640284, ISSN: 0163-6804, [retrieved on 20170202], DOI: 10.1109/MCOM.2017.1600587CM

## Description

### TECHNICAL FIELD

The present disclosure relates generally to the field of secure communication. More particularly, it relates to establishment of a session key to be shared between a communication device and a network application function.

### BACKGROUND

Problems related to a wireless communication device accessing two or more different networks will be exemplified herein in relation to a specific scenario with a drone. It should be noted that this example is merely illustrative and that the same or similar problems may arise in other scenarios where a wireless communication device is accessing two or more different networks.

Drones (communication devices) can autonomously navigate and perform tasks in areas where mobile network coverage may be poor. For example, a geographical area may comprise multiple sparse non-3GPP access networks (each having one or more access points) operated by multiple different operators, e.g. one or more WiFi networks, one or more Low-Power Wide-Area Networks, or a combination thereof.

In an example use case, a drone may fly over an area where a plurality of sensors is installed to collect data from the sensors. The sensors in this scenario may, typically, be owned and operated by multiple providers, and such providers may not necessarily have trust relations with each other.

In this scenario, the drone may need access to access points of the above mentioned sparse non-3GPP networks, e.g. to report collected sensor data, receive instructions, receive firmware updates, etc. Therefore, there is a need for a dynamic mechanism for gaining access to such access points. A straight-forward approach to this need may include the drone carrying (and maintaining) a list of access credentials to all access networks it should be able to connect to.

However, using such a list of access credentials for all possible access networks that a drone may need to connect to is problematic. For example, such an approach may entail a risk for credential leakage, e.g. since a drone needs to have the credentials in clear at the point of authentication. Furthermore, it is typically cumbersome to administer network credential updates with such an approach, since new access credentials (e.g. passwords) have to be distributed to all relevant drones.

US 2012/0284785 A1 describes a method for facilitating access to a first access network wherein a wireless communication device is authenticated with a second access network and temporary access credentials are generated using access information provided by the second access network. The wireless communication device transforms the temporary access credentials and an identifier of the first access network and the transformed access credentials are transmitted for performing authentication with the first access network. One problem with this approach is that the derived access credential (the password Ks_SSID) is sent in clear when authenticating to the first access network and thus can be intercepted and used by another device performing an impersonation attack. Furthermore, because the credential has been transmitted it has to be considered as "consumed" and should not be used again in a future authentication. Hence, a new access credential must be generated for every network authentication according to this solution. Acquiring a new access credential requires additional complexity and network access with the second access network every time access to the first network is needed. Another problem with this solution is that the first network provider may not fully trust the second network provider (e.g. credential leakage at the bootstrapping server function (BSF)) and would like to avoid that the second access provider knows the access credentials for the first network.

Therefore, there is a need for alternative network access approaches. Preferably such approaches are secure and dynamic.

WO 2013/064716 describes a method for providing a security mechanism for an external code.

WO 2006/113206 describes a method of key material generation in which the key material is used to authenticate communication for user equipment and at least one network application function.

### SUMMARY

The invention is defined by the independent claims. Preferred embodiments are defined by the dependent claims.

The current disclosure refers to example scenarios, and associated example problems, where embodiments may be applicable, e.g. the drone scenario mentioned above. It should be noted that such scenarios, problems and applications are merely illustrative examples and are not intended as limiting. Contrarily, embodiments may be equally applicable in other scenarios where establishment of a session key may be suitable, and wherein the session key is to be shared between a communication device and a network application function.

It should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

It is an object of some embodiments to solve or mitigate, alleviate, or eliminate at least some of the above or other disadvantages.

According to a first aspect, this is achieved by a method of establishing a session key at a communication device, wherein the session key is to be shared between the communication device and a network application function (NAF) and wherein a service bootstrap key and an associated transaction identifier, previously derived by application of a general bootstrapping architecture (GBA) procedure, are shared between the communication device and a bootstrapping server function (BSF).

The method comprises acquiring a NAF identifier associated with the NAF, deriving a NAF specific key based on the NAF identifier and the service bootstrap key, deriving the session key based on the NAF specific key and one or more key defining parameters, wherein the key defining parameters are accessible by the communication device and by the NAF and are non-accessible by the BSF, and transmitting an attach request message and the transaction identifier towards the NAF for establishment of the session key at the NAF.

In some embodiments, the method may further comprise receiving an attach response message from the NAF, thereby establishing a communication session based on the session key.

In some embodiments, the method may further comprise, during the established communication session, deriving a new service bootstrap key and an associated new transaction identifier, to be shared between the communication device and the BSF, by re-applying the GBA procedure.

The method may further comprise discarding the service bootstrap key and the associated transaction identifier previously derived according to some embodiments.

According to some embodiment, the method may further comprise continuously ensuring that there is a valid service bootstrap key and the associated transaction identifier previously derived.

In some embodiments, the method may further comprise discarding the session key when the communication session is terminated.

A second aspect is a method of establishing a session key at a network application function (NAF), wherein the session key is to be shared between a communication device and the NAF and wherein a service bootstrap key and an associated transaction identifier, previously derived by application of a general bootstrapping architecture (GBA) procedure, are shared between the communication device and a bootstrapping server function (BSF).

The method comprises receiving an attach request message and the transaction identifier from the communication device, transmitting the transaction identifier and a NAF identifier associated with the NAF towards the BSF, in response thereto receiving a NAF specific key from the BSF, wherein the NAF specific key is based on the NAF identifier and the service bootstrap key, and deriving the session key based on the NAF specific key and one or more key defining parameters, wherein the key defining parameters are accessible by the communication device and by the NAF and are non-accessible by the BSF.

In some embodiments, the method may further comprise transmitting an attach response message towards the communication device, thereby establishing a communication session based on the session key.

In some embodiments, the method may further comprise discarding the session key when the communication session is terminated.

A third aspect is an arrangement for establishment of a session key at a communication device, the session key to be shared between the communication device and a network application function (NAF), wherein the communication device is configured to maintain a service bootstrap key and an associated transaction identifier, previously derived by application of a general bootstrapping architecture (GBA) procedure, and shared between the communication device and a bootstrapping server function (BSF).

The arrangement comprises a controller configured to cause acquisition of a NAF identifier associated with the NAF, derivation of a NAF specific key based on the NAF identifier and the service bootstrap key, derivation of the session key based on the NAF specific key and one or more key defining parameters, wherein the key defining parameters are accessible by the communication device and by the NAF and are non-accessible by the BSF, and transmission of an attach request and comprising the transaction identifier towards the NAF for establishment of the session key at the NAF.

A fourth aspect is a communication device comprising the arrangement of the third aspect.

A fifth aspect is an arrangement for establishment of a session key at a network application function (NAF), the session key to be shared between a communication device and the NAF.

The arrangement comprises a controller configured to cause reception of an attach request message and a transaction identifier from the communication device, transmission of the transaction identifier and a NAF identifier associated with the NAF towards a bootstrapping server function (BSF), in response thereto reception of a NAF specific key from the BSF, wherein the NAF specific key is based on the NAF identifier and a service bootstrap key, and derivation of the session key based on the NAF specific key and one or more key defining parameters, wherein the key defining parameters are accessible by the communication device and by the NAF and are non-accessible by the BSF.

The service bootstrap key and the associated transaction identifier, previously derived by application of a general bootstrapping architecture (GBA) procedure, are shared between the communication device and the BSF.

A sixth aspect is an access network node configured to implement a network application function (NAF) and comprising the arrangement of the fifth aspect.

A seventh aspect is a computer program product comprising a non-transitory computer readable medium, having thereon a computer program comprising program instructions. The computer program is loadable into a data processing unit and configured to cause execution of the method according to the any of the first and second aspects when the computer program is run by the data processing unit.

In some embodiments, any of the above aspects may additionally have features identical with or corresponding to any of the various features as explained above for any of the other aspects.

An advantage of some embodiments is that secure communication is provided for. For example, security of communicator may be improved or may be increased compared to prior art solutions. This advantage may, for example, be caused by ignorance at the BSF regarding the session key since the session key is known/derivable exclusively at the communication device and at the NAF.

Another advantage of some embodiments is that credential leakage may be mitigated. This advantage may, for example, be due to that the communication device does not have to carry a list of credentials for each network access function it may encounter.

Yet an advantage of some embodiments is that credential update administration may be facilitated. This advantage may, for example, be due to that the communication device does not have to carry a list of credentials for each network access function it may encounter.

### BRIEF DESCRIPTION OF THE DRAWINGS

Further objects, features and advantages will appear from the following detailed description of embodiments, with reference being made to the accompanying drawings. The drawings are not necessarily to scale, emphasis instead being placed upon illustrating the example embodiments.
Figure 1 is a schematic drawing illustrating example general bootstrapping architecture (GBA) actors and reference points between them;
Figure 2 is a schematic drawing illustrating an example system according to some embodiments;
Figure 3 is a flowchart illustrating example method steps according to some embodiments;
Figure 4 is a flowchart illustrating example method steps according to some embodiments;
Figure 5 is a signaling diagram illustrating example signaling according to some embodiments;
Figure 6 is a schematic drawing illustrating example associations between keys according to some embodiments;
Figure 7 is a signaling diagram illustrating example signaling according to some embodiments;
Figure 8 is a schematic block diagram illustrating example arrangements according to some embodiments;
Figure 9 is a schematic drawing illustrating an example computer readable medium according to some embodiments;
Figure 10 is a schematic drawing illustrating an example telecommunication network connected via an intermediate network to a host computer in accordance with some embodiments;
Figure 11 is a schematic drawing illustrating an example host computer communicating via a base station with a user equipment over a partially wireless connection in accordance with some embodiments; and
Figures 12-15 are flowcharts illustrating example method steps implemented in a communication system including a host computer, a base station and a user equipment in accordance with some embodiments.

### DETAILED DESCRIPTION

As already mentioned above, it should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Embodiments of the present disclosure will be described and exemplified more fully hereinafter with reference to the accompanying drawings. The solutions disclosed herein can, however, be realized in many different forms and should not be construed as being limited to the embodiments set forth herein.

It should be noted that when a user equipment (UE) is referred to herein the term is meant to encompass any suitable communication device, not necessarily operated by any user.

In the following, embodiments will be described where a session key is established to be shared between a communication device and a network application function (NAF), while it is not known or derivable at bootstrapping server function (BSF).

The session key is established based on a service bootstrap key, an associated transaction identifier, and one or more key defining parameters. The service bootstrap key and the associated transaction identifier are previously derived by application of a general bootstrapping architecture (GBA) procedure, and are shared between the communication device and the BSF. The one or more key defining parameters are accessible by the communication device and by the NAF, but are non-accessible by the BSF.

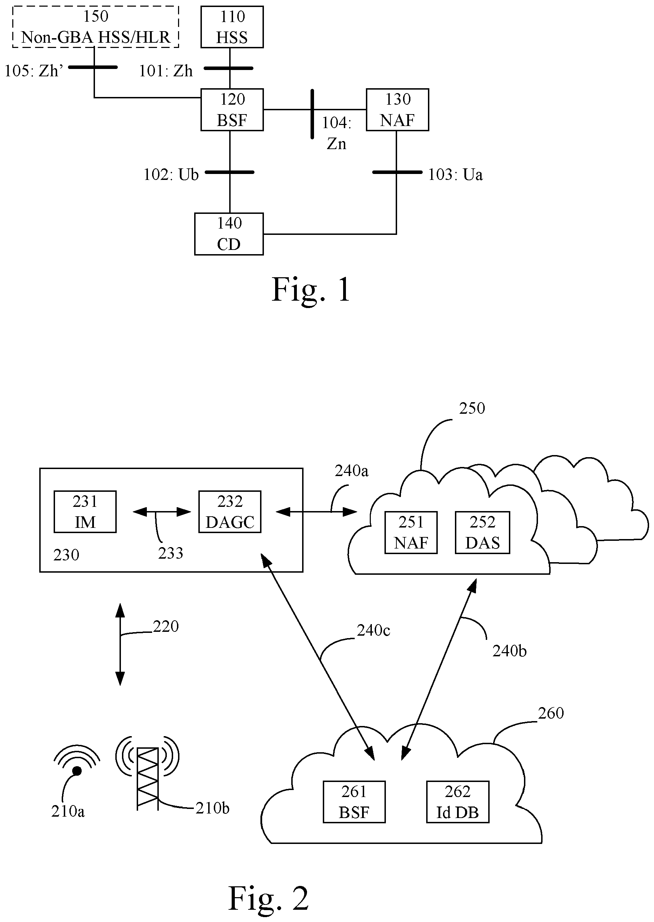

Figure 1 schematically illustrates an example GBA setup including GBA actors and reference points between them. A description of this setup is also available from Third Generation Partnership Project, Technical Specification 33.220 (3GPP TS33.220), "Generic Authentication Architecture (GAA); Generic Bootstrapping Architecture (GBA)". The GBA actors are a communication device, CD, 140 (e.g. a User Equipment, UE), a network application function, NAF, 130, a bootstrapping server function, BSF, 120 and a home subscriber server, HSS, 110. The interfaces (or reference points) are illustrated as 101 (interface Zh between BSF and HSS), 102 (interface Ub between BSF and CD), 103 (interface uA between NAF and CD), and 104 (interface Zn between BSF and NAF). If no HSS with reference point Zh is deployed, the BSF may have an association with a non-GBA HSS/HLR 150 via reference point Zh' 105. Generally, secure communication may be already established between NAF and BSF, e.g. via use of transport layer security (TLS).

Referring to the above-described example scenario of a drone, each drone may be acting as the communication device 140, and each of the multiple sparse non-3GPP networks may be acting as a NAF 130. A service provider, that provides identities for drones and access credentials, may host a credentialing service represented by the BSF 120 and the HSS 110.

In a typical scenario according to the prior art, access credentials in the form of an identifier of the communication device (e.g. a UE identification, UE ID, an international mobile subscriber identity, IMSI, or the like) and a secret key is kept both at the communication device 140 and at the HSS 110. The communication key may be static or may be instantiated dynamically in a reoccurring authentication procedure.

Figure 2 schematically illustrates an example system setup using GBA according to some embodiments. A credential service provider 260 hosts the BSF 261 and an associated database of communication device identities, Id DB, 262 (compare with 120 and 110 of Figure 1). Each of a plurality of access networks 250 hosts a respective NAF 251 (compare with 130 of Figure 1) and an associated drone application server, DAS, 252. A communication device 230 (e.g. a drone, compare with 140 of Figure 1) hosts an identity module, IM, 231 (e.g. a subscriber identity module, SIM) and a drone application GBA client, DAGC, 232.

As will be explained in the following, secure communication 220 between the communication device 230 and an access point (210a, 210b) of an access network associated with one of the NAFs can be achieved using an established session key shared between the communication device 230 and the applicable NAF 251.

The establishment of the session key may involve the identity of the communication device kept by the IM being provided to the DAGC 232 as illustrated at 233, and GBA procedures (GBA application security procedures 240a, GBA application authentication procedures 240b, and GBA device authentication procedures 240c) being performed between the DAGC 232 of the communication device, the access networks 250, and the credential service provider 260.

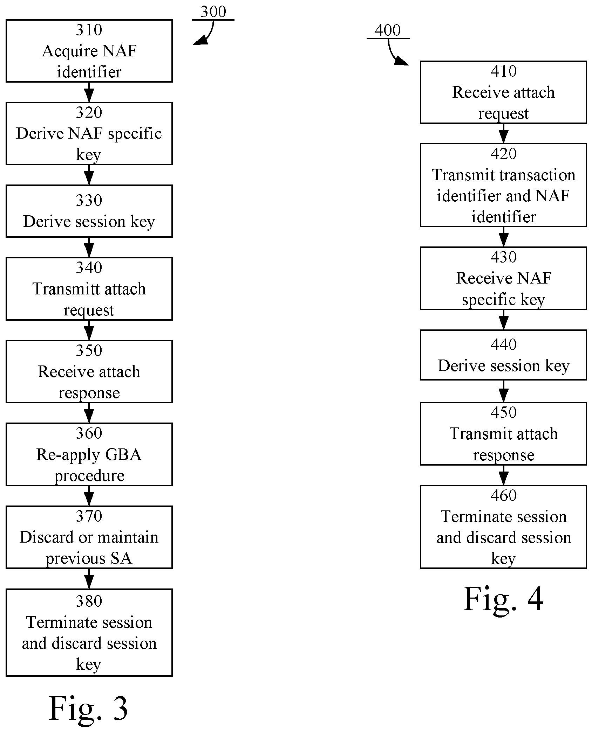

Figure 3 illustrates an example method 300 according to some embodiments. The method 300 may be performed by a communication device (for example any of the communication devices 140 of Figure 1 and 230 of Figure 2).

The method 300 is for establishing a session key (K_access) at the communication device, wherein the session key is to be shared between the communication device and a network application function (NAF, for example any of the NAFs 130 of Figure 1 and 251 of Figure 2).

Before the method 300 is performed, a service bootstrap key (Ks) and an associated transaction identifier (B-TID) have been previously derived by application of a general bootstrapping architecture, GBA, procedure. This derivation has typically been performed during, or in association with, a previous communication session between the communication device and the same, or a different, NAF as that targeted by the current execution of the method 300. The previously derived service bootstrap key and transaction identifier are shared between the communication device and a bootstrapping server function (BSF, for example any of the BSFs 120 of Figure 1 and 260 of Figure 2) when execution of the method 300 begins.

In step 310, the communication device acquires a NAF identifier (NAF_ld) associated with the targeted NAF. For example, the NAF identifier may be acquired by listening to broadcast information from the access network associated with the NAF. Alternatively or additionally, the NAF identifier may be acquired by receiving a dedicated message from the access network associated with the NAF, wherein the dedicated message is indicative of the NAF identifier (e.g. comprising the NAF identifier). Such dedicated message may, for example, be transmitted by the access network and received by the communication device in response to a network access request message being transmitted by the communication device and received by the access network. Yet alternatively or additionally, the NAF identifier may be acquired by retrieving it from storing circuitry comprised in the communication device.

Step 320 comprises the communication device deriving a NAF specific key (Ks_NAF) based on the NAF identifier (NAF_ld) and the service bootstrap key (Ks), and step 330 comprises the communication device deriving the session key (K_access) based on the NAF specific key (Ks_NAF) and one or more key defining parameters.

The key defining parameters are accessible by the communication device and by the NAF and are non-accessible by the BSF. In this way, the session key is neither known nor derivable at the BSF, which increases security. Furthermore, since the access credentials are dynamically established, there is no need for the communication device to carry a list of access credentials which also increases security and reduces the need for cumbersome credential updates.

The key defining parameters can be any suitable parameters accessible by the communication device and by the NAF and non-accessible by the BSF. Generally, such parameters may be termed local parameters or local data, wherein local refers to the system comprising only the communication device and the NAF.

One example category of such parameters includes conditions of a radio link between the communication device and an access point of the NAF, which may be measured or estimated at either or both of the communication device and the access point (and possibly communicated between them).

Another example category of such parameters includes some quantity only accessible to the communication device and the NAF, e.g. a counter maintained by either or both (in synchronicity) of the communication device and the access point (and possibly communicated between them) or a random number generated by either of the communication device and the access point and communicated between them.

When the session key (K_access) has been derived in step 330, the communication device transmits an attach request message and the transaction identifier (B_TID) towards the NAF, as illustrated by step 340, for establishment of the session key at the NAF. For example, the attach request message may comprise the transaction identifier.

In response to transmitting the attach request message, the communication device may receive an attach response message from the NAF as illustrated by step 350. Thereby a communication session is established between the communication device and the NAF based on the established session key.

During the established communication session, a new service bootstrap key and an associated new transaction identifier (to be shared between the communication device and the BSF) may be derived by re-applying the GBA procedure as illustrated by step 360. Generally one or more pairs of a new service bootstrap key and an associated new transaction identifier may be derived in step 360. The latter approach provides for flexibility in which pair of service bootstrap key and associated transaction identifier to be used as previously derived service bootstrap key and associated transaction identifier in further executions of the method 300.

The new service bootstrap key and the associated new transaction identifier may then replace the previously derived service bootstrap key and associated transaction identifier in further executions of the method 300. Thus, the service bootstrap key and the associated transaction identifier previously derived may be discarded after the new ones have been derived as illustrated by step 370.

In some embodiments, multiple pairs of service bootstrap key and associated transaction identifier may be simultaneously maintained. Thus, the service bootstrap key and the associated transaction identifier previously derived may be continuously maintaining after the new ones have been derived as also illustrated by step 370. This provides for flexibility in which pair of service bootstrap key and associated transaction identifier to be used as previously derived service bootstrap key and associated transaction identifier in further executions of the method 300. In such embodiments, the service bootstrap key and the associated transaction identifier previously derived may be eventually discarded (e.g. when a certain time duration has elapsed since they were derived or when they have been used for a certain number of executions of the method 300).

Typically, the session key may be temporary and may be discarded when the communication session is terminated as illustrated by step 380.

Figure 4 illustrates an example method 400 according to some embodiments. The method 400 may be performed by a network application function (NAF, for example any of the NAFs 130 of Figure 1 and 251 of Figure 2). The method may, for example, be performed in an access point or any other suitable node of the NAF.

The method 400 is for establishing a session key (K_access) at the NAF, wherein the session key is to be shared between a communication device and the NAF.

Before the method 400 is performed, a service bootstrap key (Ks) and an associated transaction identifier (B-TID) have been previously derived by application of a general bootstrapping architecture, GBA, procedure. This derivation has typically been performed during, or in association with, a previous communication session between the communication device and the same, or a different, NAF as the one executing the method 400. The previously derived service bootstrap key and transaction identifier are shared between the communication device and a bootstrapping server function (BSF, for example any of the BSFs 120 of Figure 1 and 260 of Figure 2) when execution of the method 400 begins. Hence, the NAF is typically not knowledgeable regarding the previously derived service bootstrap key and transaction identifier when execution of the method 400 begins.

Also before the execution of the method 400 begins, some other steps may possibly be executed. For example, a NAF identifier (NAF _Id) associated with the NAF may be provided to the communication device (compare with step 310 of Figure 3), e.g. via broadcast information or via a dedicated message from the access network associated with the NAF, wherein the dedicated message is indicative of the NAF identifier (e.g. comprising the NAF identifier). Such dedicated message may, for example, be transmitted by the access network and received by the communication device in response to a network access request message being transmitted by the communication device and received by the access network.

In step 410, an attach request message and the transaction identifier (B_TID) is received from the communication device (compare with step 340 of Figure 3), and then the transaction identifier and the NAF identifier (NAF _Id) are transmitted towards the BSF as illustrated by step 420.

In response to execution of step 420, a NAF specific key (Ks_NAF) is received from the BSF in step 430. The NAF specific key (Ks_NAF) has been derived at the BSF based on the NAF identifier (NAF_ld) and the service bootstrap key (Ks) (compare with step 320 of Figure 3).

Then, the NAF derives the session key (K_access) in step 440 based on the NAF specific key (Ks_NAF) and one or more key defining parameters, wherein the key defining parameters are accessible by the communication device and by the NAF and are non-accessible by the BSF (compare with step 330 of Figure 3, in connection to which the key defining parameters have also been explained and exemplified).

In step 450, an attach response message is transmitted towards the communication device (compare with step 350 of Figure 3), thereby establishing a communication session based on the session key (K_access).

As explained in connection to Figure 3 (step 360), a new service bootstrap key and an associated new transaction identifier (to be shared between the communication device and the BSF) may be derived by re-applying the GBA procedure during the established communication session.

Typically, the session key may be temporary and may be discarded when the communication session is terminated as illustrated by step 460 (compare with step 380 of Figure 3).

Thus, previously derived service bootstrap key (Ks) and associated transaction identifier (shared between the communication device and the BSF) and a NAF identifier (known at the NAF) are used to derive a NAF specific key (Ks_NAF) at the communication device and at the BSF.

Since the NAF specific key (Ks_NAF) is NAF specific it cannot be used to access other access networks than that associated with the targeted NAF. The NAF specific key (Ks_NAF) may typically be used as session key for some less sophisticated approaches, after having being provided to the NAF by the BSF (compare with step 430 of Figure 4). A drawback with such an approach is that the session key is then known at the BSF which makes the approach vulnerable. The described embodiments solves this problem by deriving, at the communication device and at the NAF, a session key (K_access) based on the NAF specific key (Ks_NAF) and one or more key defining parameters which are non-accessible by the BSF.

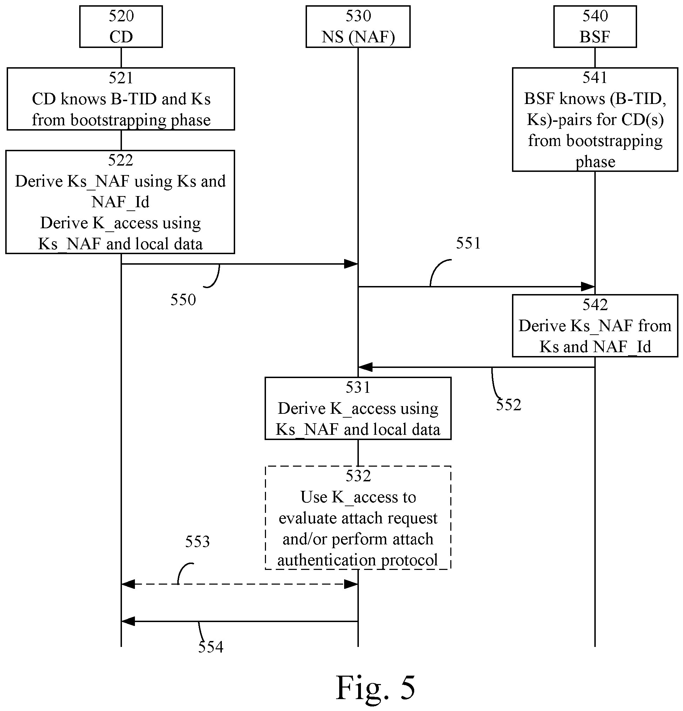

Figure 5 is a signaling diagram illustrating example signaling between a communication device (CD) 520, a network server (NS) 530 associated with a network access function (NAF) and a bootstrap server function (BSF) 540 according to some embodiments. The CD, the NAF and the BSF of Figure 5 may correspond to similar entities described in connection with one or more of Figures 1-4.

In the example of Figure 5, a generic network attachment procedure is illustrated. From the bootstrapping phase the communication device 520 and BSF 540 shares Ks and B-TID as illustrated by 521 and 541. The communication device 520 derives Ks_NAF based on Ks and NAF _Id as illustrated by 522 (compare with step 320 of Figure 3) and then derives K_access based on Ks_NAF and local data as also illustrated by 522 (compare with step 330 of Figure 3).

As mentioned above, there are various approaches to how the communication device may acquire (obtain) NAF _Id. The particular approach may depend on the applicable network. For example, NAF _Id may be hard-coded in the communication device or the communication device may obtain NAF _Id by listening to broadcast messages comprising network information.

The local data used in the derivation of K_access may also be obtained from broadcast messages in some approaches, or it may be generated by the communication device and transmitted to the NAF, e.g. in the attach request message (compare with step 340 of Figure 3) or otherwise as part of an attach authentication protocol.

Network attachment typically involves mutual authentication of the communication device and the access network. This authentication may be implemented via an attach request message 550 transmitted from the communication device to the access network (compare with step 340 of Figure 3 and step 410 of Figure 4) and a corresponding attach response 554 transmitted from the access network to the communication device (compare with step 350 of Figure 3 and step 450 of Figure 4).

The authentication may also involve other authentication related messages as suitable. For example, if an extensible authentication protocol (EAP) is used, the number of messages sent back and forth is larger than two and depends on the EAP algorithm applied.

The communication device typically connects to the access network via a gateway (GW) or an access point (AP). Depending on the access network, the authentication may be handled by the GW, by the AP, or by a separate network node such as an authentication, authorization and accounting (AAA) server.

In any case, the communication device transmits an attach request message 550 to the access network (compare with step 340 of Figure 3 and step 410 of Figure 4). Either in this message or in another message from of the authentication procedure, the communication device provides B-TID to the access network.

The NAF 530 uses B-TID to request Ks_NAF from the BSF. This is illustrated in Figure 5 by the NAF 530 transmitting an authentication request 551 comprising B-TID and NAF _Id to the BSF (compare with step 420 of Figure 4), the BSF 540 deriving Ks_NAF based on Ks and NAF _Id as illustrated by 542 and transmitting an authentication response 552 to the NAF 530 (compare with step 430 of Figure 4) comprising Ks_NAF and possibly a key lifetime indicator.

Then, the NAF 530 derives K_access based on Ks_NAF and local data as illustrated by 531 (compare with step 440 of Figure 4). K_access may be used by the NAF 530 to evaluate the attach request and/or to perform attach authentication protocol as illustrated by 532 and 553. Then, an attach response message 554 is transmitted from the NAF to the communication device (compare with step 450 of Figure 4 and step 350 of Figure 3), thereby establishing a communication session based on K_access (when the attach response message indicates that the attach request is granted).

Generally, one way for the communication device and the BSF to derive Ks_NAF is to apply the function: *Ks_NAF = KDF (Ks, "gba-me", RAND, IMPI, NAF_Id),* where KDF is the key derivation function as specified in 3GPP TS33.220 Annex B and the NAF_Id format depends on which access network is being targeted, "gba-me" is a fixed string used in the key derivation to tie the key derivation function to a specific context (any text string could be used), RAND is a 128-bit random number as defined by the AKA algorithm that is used for the authentication and key agreement (see 3GPP TS 33.102), and IP Multimedia Private Identity (IMPI) is the identifier of the 3GPP subscription. The identifier IMPI (or a temporary IMPI, TIMPI) is used in the bootstrapping phase to identify the user of the service, such that the correct key material can be picked up by BSF when running the AKA protocol. IMPI is then a subscription identifier for the credential service.

Generally, any credential service identifier (CSID) may be used for the purpose fulfilled by the IMPI in the example above. Examples of CSID include, but are not limited to, a communication device identifier (CDID), an IMPI, or an IMSI.

Also generally, one way for the communication device and the NAF to derive Ks_access is to apply the function: *K_access = KDF (Ks_NAF, local network data).*

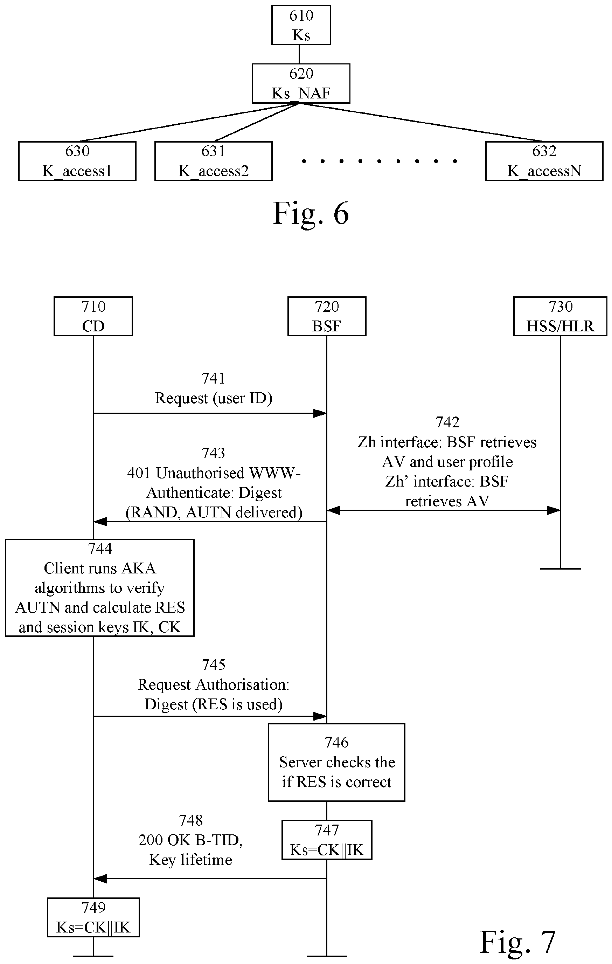

Figure 6 is a schematic drawing illustrating example associations between keys according to some embodiments. As has been described above, the previously derived service bootstrap key (Ks) 610 is used to derive the NAF specific key (Ks_NAF) 620 in the communication device and in the BSF. For each NAF, one or more session keys (K_access1, K_access2, ... , K_accessN) 630, 631, 632 may then be derived in the communication device and in the NAF based on the NAF specific key (Ks_NAF) 620 and one or more parameters known only to the communication device and in the NAF. Since, the one or more parameters (local information/data) used to derive the session key(s) may be related to a particular AP/GW and/or may vary over time, several different session key(s) may be derived for each NAF.

Figure 7 is a signaling diagram illustrating example signaling in a GBA procedure according to some embodiments. This procedure is an example of how step 360 of Figure 3 may be implemented and also of how the previously derived service bootstrap key (Ks) and associated transaction identifier (B-TID) may be achieved.

Figure 7 illustrates example signaling between a communication device (CD) 710, a bootstrap server function (BSF) 720, and a home subscriber server / home location register (HSS/HLR) 730 according to some embodiments. The CD, the BSF and the HSS of Figure 7 may correspond to similar entities described in connection with one or more of Figures 1-5.

The example GBA procedure of Figure 7 starts by the CD sending a request (e.g. a HyperText Transfer Protocol, HTTP, request) indicative of the identifier (user ID, e.g. the CSID referred to above) of the CD towards the BSF as illustrated by 741.

As illustrated by 742, the BSF retrieves a complete set of GBA user security settings and one Authentication Vector (AV = RAND∥AUTN∥XRES∥CK∥IK) from the HSS over the reference point Zh, where ∥ denoted concatenation and where the notations are defined in accordence with the disclosure of 3GPP TS 33.102. If no HSS with Zh reference point is deployed, the BSF retrieves the Authentication Vector over the reference point Zh' from either a (GBA incapable) HLR or a (GBA incapable) HSS with Zh' reference point support, as also illustrated by 742.

Then, as illustrated by 743, the BSF forwards RAND and AUTN to the CD in the so called "401 message" (without CK, IK, XRES), indicated in Figure 7 as "401 Unauthorised WWW-Authenticate: Digest (RAND, AUTN delivered)". This is done for the purpose of demanding the CD to authenticate itself.

As illustrated by 744, the CD checks AUTN to verify that the challenge 743 is from an authorized network and calculates CK, IK, RES. This may be achieved by running an Authentication and Key Agreement (AKA) algorithm. After step 744 has been performed, session keys IK and CK are available in both BSF and CD.

The CD then sends another request 745 (e.g. an HTTP request) to the BSF, comprising the Digest AKA response (calculated using RES), and the BSF authenticates the CD by verifying the Digest AKA response as illustrated by 746.

The BSF generates a service bootstrap key (Ks) by concatenating CK and IK as illustrated by 747. Although not shown in Figure 7, the associated transaction identifier (B-TID) is also generated, e.g. in NAI (network access identifier) format by taking the base64 encoded (cf. RFC 3548) RAND value from 743 and the BSF server name; base64encode(RAND)@BSF_servers_domain_name). Base64 is a way to encode binary characters (e.g. RAND which consists of sixteen 8-bit binary characters) into "text characters" such that they can be transmitted as text. Base64 comprises of 64 characters (big letters, small letters, digits, and a few more). For example, 3 binary characters (24 bits) may be divided into groups of 6 bits and encoded into 4 base64 characters.

The BSF sends a so called "200 OK message" 748 (including B-TID and the key lifetime of Ks) to the CD to indicate the success of the authentication. The CD also generates the service bootstrap key (Ks) by concatenating CK and IK as illustrated by 749.

Both the CD and the BSF then uses Ks to derive the Ks_NAF as explained above, wherein Ks_NAF may be used as a base for securing the reference point Ua. In the standard application of GBA, the BSF is fully trusted by the network operator. Hence, Ks_NAF may be used as the session key. This approach is undesirable in the scenarios described herein, since the BSF is typically not operated by the owner of the access network the drone attaches to, and may also be undesirable in other scenarios. Therefore, a session key is derived in the communication device and in the NAF based on Ks_NAF and parameters unknown to the BSF as elaborated on above.

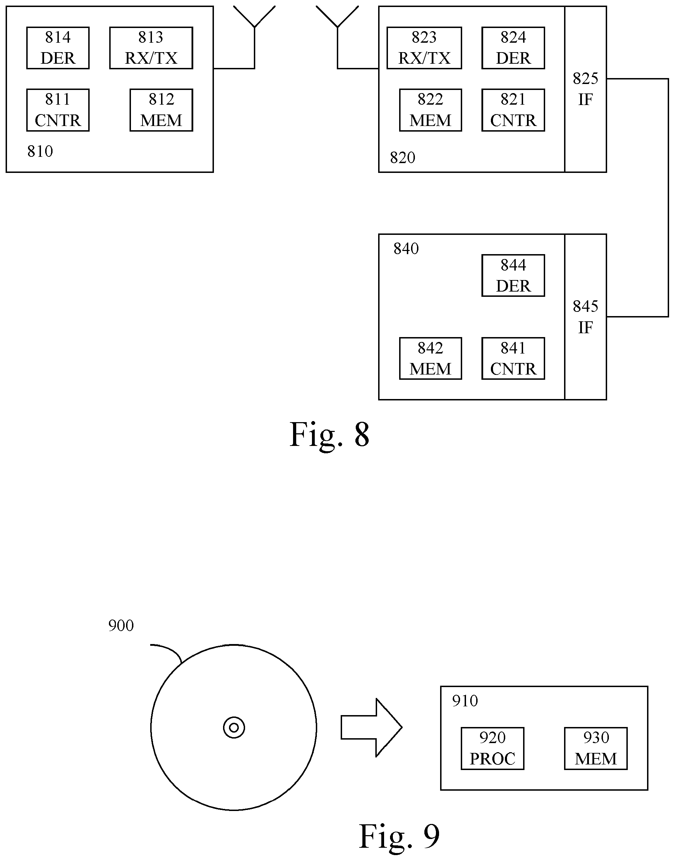

Figure 8 is a schematic block diagram illustrating example arrangements according to some embodiments. The arrangements may be comprises in, respectively, a communication device 810, an access network node 820 associated with a NAF, and a BSF 840. The arrangements may be configured to cause execution of (e.g. to execute) method steps as described in connection to any of the Figures 3, 4, 5 and 7 as applicable.

In the communication device 810, an arrangement is comprised for establishment of a session key at the communication device, the session key to be shared between the communication device and the network application function (NAF). The communication device is configured to maintain a service bootstrap key and an associated transaction identifier, previously derived by application of a general bootstrapping architecture (GBA) procedure, and shared between the communication device and the bootstrapping server function (BSF).

The arrangement comprises a controller (CNTR; e.g. controlling circuitry) 811 configured to cause acquisition of a NAF identifier associated with the NAF. To this end, the controller 811 may be associated with a receiver, here represented as a transceiver (RX/TX; e.g. transceiving circuitry) 813, configured to receive the NAF identifier from the NAF as elaborated on above. Alternatively or additionally, the controller 811 may be associated with a memory (MEM; e.g. storing circuitry) 812 configured to comprise the NAF identifier elaborated on above. The memory may also be configured to comprise the previously derived service bootstrap key and associated transaction identifier.

The controller is also configured to cause derivation of a NAF specific key based on the NAF identifier and the service bootstrap key and derivation of the session key based on the NAF specific key and one or more key defining parameters, wherein the key defining parameters are accessible by the communication device and by the NAF and are non-accessible by the BSF. To this end, the controller 811 may be associated with a deriver (DER; e.g. deriving circuitry) 814 configured to derive the NAF specific key based on the NAF identifier and the service bootstrap key and to derive the session key based on the NAF specific key and the one or more key defining parameters.

The controller is further configured to cause transmission of an attach request message and the transaction identifier towards the NAF for establishment of the session key at the NAF. To this end, the controller may be associated with a transmitter, here represented as the transceiver 813, configured to transmit the attach request message and the transaction identifier.

The controller 811 may be further configured to cause reception (e.g. by the transceiver 813) of an attach response message from the NAF, and thereby establishment of a communication session based on the session key.

The controller may also be further configured to cause, during the established communication session, derivation of a new service bootstrap key and an associated new transaction identifier, to be shared between the communication device and the BSF, by re-application of the GBA procedure. To this end, the controller may be associated with a GBA deriver (e.g. the deriver 814; compare also with 232 of Figure 2) configured to derive the new service bootstrap key and the associated new transaction identifier.

The controller 811 may be further configured to cause discardment and/or continuous maintenance of the service bootstrap key and the associated transaction identifier previously derived, and/or to cause discardment of the session key responsive to termination of the communication session.

One or more of the transceiver 813, the memory 812 and the deriver 814 may be comprised in the arrangement according to some embodiments. The deriver 814 may possibly be comprised also in the controller 811 according to some embodiments.

In the access network node 820, an arrangement is comprised for establishment of a session key at the access network node, the session key to be shared between the communication device and the network application function (NAF).

The arrangement comprises a controller (CNTR; e.g. controlling circuitry) 821 configured to cause reception of an attach request message and a transaction identifier from the communication device. To this end, the controller 821 may be associated with a receiver, here represented as a transceiver (RX/TX; e.g. transceiving circuitry) 823, configured to receive the attach request message and the transaction identifier from the communication device.

The controller 821 is also configured to cause transmission of the transaction identifier and a NAF identifier associated with the NAF towards the BSF and reception of a NAF specific key (based on the NAF identifier and a service bootstrap key) from the BSF. To this end, the controller 821 may be associated with a communication interface (IF; e.g. interface circuitry) 825, configured to transmit the transaction identifier and the NAF identifier and to receive the NAF specific key.

The controller is further configured to cause derivation of the session key based on the NAF specific key and one or more key defining parameters as elaborated on above. To this end, the controller 821 may be associated with a deriver (DER; e.g. deriving circuitry) 824 configured to derive the session key based on the NAF specific key and the one or more key defining parameters.

The controller 824 may be further configured to cause transmission of an attach response message towards the communication device, and thereby establishment of a communication session based on the session key. To this end, the controller 821 may be associated with a transmitter, here represented as the transceiver (RX/TX; e.g. transceiving circuitry) 823, configured to transmit the attach response message.

The controller 821 may be further configured to cause discardment of the session key responsive to termination of the communication session.

The controller 821 may also be associated with a memory (MEM; e.g. storing circuitry) 822 configured to comprise the NAF identifier elaborated on above.

One or more of the transceiver 823, the memory 822, the deriver 824 and the communication interface 825 may be comprised in the arrangement according to some embodiments. The deriver 824 may possibly be comprised also in the controller 821 according to some embodiments.

The BSF 840 is configured to maintain the service bootstrap key and the associated transaction identifier, previously derived by application of the general bootstrapping architecture (GBA) procedure, and shared between the communication device and the bootstrapping server function (BSF). To this end the BSF may be associated with (e.g. may comprise) a memory (MEM; e.g. storing circuitry) 842 configured to comprise the previously derived service bootstrap key and associated transaction identifier.

The BSF 840 is also configured to receive the transaction identifier and the NAF identifier from the NAF and to transmit a NAF specific key to the NAF. To this end, the BSF 840 may be associated with a communication interface (IF; e.g. interface circuitry) 845, configured to receive the transaction identifier and the NAF identifier and to transmit the NAF specific key.

The BSF 840 may also comprise a controller (CNTR; e.g. controlling circuitry) 841 configured to cause derivation of the NAF specific key based on the NAF identifier and the service bootstrap key. To this end, the controller 841 may be associated with (e.g. may comprise) a deriver (DER; e.g. deriving circuitry) 844 configured to derive the NAF specific key.

Thus, according to some embodiments, a credentialing system for a plurality of access networks is provided. According to some embodiments, a system is provided for deriving entity unique network access credentials in a setting with multiple access networks. The solution according to some embodiments is generic and applies to any entity (communication device) moving around between and connecting to different access networks. The access networks are generally provided by different access network providers. Generic Bootstrapping Architecture (GBA) procedures are used to derive network access credentials for use by the communication device in the different networks. In this setup, each network provider acts as a Network Application Function (NAF) that requests credentials from the Bootstrapping Server Function (BSF), which is typically operated by a third party.

According to some solutions presented herein, use of static access network credentials is avoided. Instead each entity (communication device) moving around between and connecting to different access networks authenticates to each network using an individual credential. The use of individual credentials decreases the risk of credentials being leaked or misused and removes the need for continuous updates of credentials.

A few illustrative examples will now be disclosed with reference to the scenario with a drone described earlier.

### Exemplifying bootstrapping procedures

During the first deployment of the drone, (open) access to a network should preferably be available to enable the drone to establish a first GBA security association (SA), which can later be used to get further network access. In general, once the first SA is established, the GBA bootstrapping may be performed in accordance with the description in 3GPP TS33.220 with the assumption that key lifetimes are long enough to ensure validity when a new access network is encountered. This enables that the drone can derive new Security Associations when it has network access, the new security associations for being used the next time it encounters a new network in a reoccurring manner.

In some embodiments, only one active security association is allowed at a time (as conventionally for GBA). Thus, as soon as a security association has been used to establish an access network connection and a new security association to replace the old one, the old security association is discarded. To avoid that the device becomes unable to connect to any network, it may (as in this case) be allowed to use the security association several times for network access, with different network access providers, until a new security association is established.

In some embodiments, multiple security associations can be derived and/or maintained in parallel, but the use of the multiple security associations may be limited such that each of them may only be usable once. Having access to multiple security associations provides a failure tolerance; if a security association - for some reason - fails to establish access to a particular network and a new security association therefore cannot be derived, there are still security association(s) available when the next access network is encountered.

In some embodiments, a hybrid approach may be used, where multiple security associations may be used multiple times.

### Exemplifying procedures using bootstrapped security association

The bootstrapping procedure described in the previous section essentially corresponds to standard GBA. However, the shared session key for network access between the CD and the NAF is derived differently to overcome shortcomings of standard GBA.

To establish a shared session key that is unknown to (and underivable by) the BSF, Ks_NAF should not be used directly as the shared session key as is done in application of standard GBA. Instead, an extra layer of key derivation may be applied where Ks_NAF is used as input to a KDF in the CD and the NAF, resulting in the shared session key K_access for network access.

To further prevent the BSF from learning the session key, the derivation of K_access includes local information (one or more parameters) that is not accessible to the BSF as elaborated on above. Such local information may comprise status parameters of the radio link between the CD and an access point associated with the NAF (e.g. signal strength, channel usage, delay, etc.). Since the local information may be associated with a particular AP/GW, several different K_access may be derived by the NAF as illustrated in Figure 6. Alternatively or additionally, the local information may comprise a counter or other metric value, possibly differently maintained at different AP/GW.

### Exemplifying embodiments using WiFi

When the access technology is WiFi, the access point unique service set identifier (SSID) may consist of two parts; one randomly generated part and one public part. The randomly generated part can be regularly regenerated and may serve as the local data in the derivation of the shared session key K_access. The public part may be used as the NAF _Id in the derivation of Ks_NAF. The SSID is broadcast by the AP to advertise the presence of the WiFi network.

In Wi-Fi Protected Access (WPA/WPA2) enterprise mode the Extensible Authentication Protocol (EAP) is used for network authentication and a method using a shared secret such as EAP-AKA and EAP-PSK may be applied, where PSK denotes "Pre-Shared Key". The B-TID may then be transferred from the CD to NAF as part of the EAP-Response/Identity message and the AAA server running the EAP protocol may extract the BSF address (informing NAF of which address may be used to acquire Ks_NAF) from B-TID. An access network supporting EAP typically uses an AAA server that performs the EAP protocol with the device, wherein each network typically has its own AAA server.

The EAP protocol may correspond to 550, 553, and 554 in Figure 5. Figure 5 shows the NAF (in the specific case of EAP, NAF represents both the AP and the AAA server). The AP is handling some communication towards the CD, e.g. relating to an identity message. In this example, 550 of Figure 5 may represent several messages. First, a request for access is transmitted from the CD, upon which the AP sends an EAP-Request/Identity message to the CD, which responds with an EAP-Response/Identity message. Based on the EAP-Response/Identity, the AP knows which AAA server to involve. Then, the AAA server and the CD communicates, wherein the AP only relays messages (corresponding to 553 in Fig 5). The AAA server communicates with the BSF (551 and 552 in Fig 5).

For WPA/WPA2 personal mode, the WPA/WPA2 pre-shared key may be used as K_access and the B-TID may be based on the device medium access control (MAC) address which is sent from the communication device to the access network as part of the attachment request. The BSF address may be hard coded in NS and the B-TID sent from the NS to BSF could be formatted as base64encode(MAC_address)@BSF_servers_domain_name.

In personal mode there is a pre-shared key (PSK; at home, a password may typically be used) for securing the WiFi communication. The K_access computed as discussed above with some local data may be used as PSK, wherein the local data may be the randomly generated part of the SSID. The full SSID may be broadcasted by the AP for personal mode as well as for enterprise mode. Referring to Figure 5, 550 represents a request from the CD to the AP, in which the MAC address of the CD and an authentication request (a message that is signed using K_access) is provided. The MAC address may be used by the AP (possibly via a network server) to construct B-TID and request the Ks_NAF (551 and 552) and then derive K_access. K_access is then used to evaluate the authentication request and a response is provided (corresponding to 554).

As mentioned above, a counter value may be used to separate access keys between different access points in the same access network. The counter value may be included in the key derivation as follows: K_access=KDF(Ks_NAF, SSIDrandom, counter). The counter value may, for example, be sent from the CD as a part of the B-TID value. The B-TID could then be the following string: "base64encode(RAND)@BSF_server_domain_name, base64(counter)".

### Exemplifying embodiments using LoRa

When the access technology is LoRa (as described, e.g. in LoRaWAN^{™} 1.1 Specification, 2017), a communication device uses two long term keys, the network key (NwkKey) and the application key (AppKey) for joining networks and deriving session keys for secure communication with the network and an application server (AS). NwkKey is known to the (home) network server (NS) and AppKey is known to the AS. When a LoRa communication device desires to connect to a LoRa network it sends a request (join-request, corresponding to 550 in Figure 5) message that is forwarded via a LoRa gateway to NS. The join request message consists of the following data (where EUI denotes Extended Unique Identifier):
- JoinEUl: a 64-bit global application ID that uniquely identifies the Join Server of the (home) network.
- DevEUI: a 64-bit global end-device ID that uniquely identifies the communication device.
- DevNonce: a 16-bit value generated by the communication device.

The join request is integrity protected using AES-CMAC (Advances Encryption Standard, Cipher-based Message Authentication Code) algorithm and NwkKey. The network validates the join request (compare with 532 of Figure 5) and, if validated, answers with an accept (join-accept, corresponding to 554 in Figure 5) message that comprises session parameters for identifying the communication device in the access network (DevAddr) and for derivation of session keys to protect messages. The join accept is also message is integrity protected using AES-CMAC algorithm and NwkKey.

In these embodiments, NwkKey may be derived from Ks_NAF (compare with 531 of Figure 5) when the communication device joins different LoRa access networks. AppKey may be assumed to be pre-shared between the communication device and the AS, but may also be generated similarly to NwkKey. In the derivation of Ks_NAF, the NAF_ld may be the JoinEUI and in the derivation of NwkKey (K_access), the DevNonce parameter may be used as the local data since it may be randomly generated by the communication device and may be assumed to be locally known only to the access network and not easily accessible for the BSF. Hence,
- Ks_NAF = KDF (Ks, "gba-me", RAND, IMPI, JoinEUI).
- NwkKey=KDF(Ks_NAF, DevNonce).

JoinEUI may be used by the access network to check if the join request was intended for that access network and if roaming is supported to locate the (home) network server. When the join request message is received, the network server responsible for the join procedure typically contacts the BSF to query Ks_NAF (compare with 551 and 552 of Figure 5). The BSF address may be hard coded in NS or the BSF address may be individual per communication device and stored as part of subscriber information that is identified using DevEUI. The B-TID value may be based on the DevEUI value, e.g. base64encode(DevEUI)@BSF_servers_domain_name.

DevNonce is only a 16-bit random value, but the NwkKey is typically only used in the join request message and the join accept message. Then, new session keys for protection of access network messages (including re-join messages) may be derived involving other local data. Hence, there may typically be more than 16 bits of local data protecting the access network communication from the BSF.

The described embodiments and their equivalents may be realized in software or hardware or a combination thereof. The embodiments may be performed by general purpose circuitry. Examples of general purpose circuitry include digital signal processors (DSP), central processing units (CPU), co-processor units, field programmable gate arrays (FPGA) and other programmable hardware. Alternatively or additionally, the embodiments may be performed by specialized circuitry, such as application specific integrated circuits (ASIC). The general purpose circuitry and/or the specialized circuitry may, for example, be associated with or comprised in an apparatus such as a communication device or a network node.

Embodiments may appear within an electronic apparatus (such as a wireless communication device or a network node) comprising arrangements, circuitry, and/or logic according to any of the embodiments described herein. Alternatively or additionally, an electronic apparatus (such as a wireless communication device or a network node) may be configured to perform methods according to any of the embodiments described herein.

According to some embodiments, a computer program product comprises a computer readable medium such as, for example a universal serial bus (USB) memory, a plug-in card, an embedded drive or a read only memory (ROM). Figure 9 illustrates an example computer readable medium in the form of a compact disc (CD) ROM 900. The computer readable medium has stored thereon a computer program comprising program instructions. The computer program is loadable into a data processor (PROC) 920, which may, for example, be comprised in a wireless communication device or a network node 910. When loaded into the data processing unit, the computer program may be stored in a memory (MEM) 930 associated with or comprised in the data-processing unit. According to some embodiments, the computer program may, when loaded into and run by the data processing unit, cause execution of method steps according to, for example, any of the methods illustrated in Figures 3,4,5 and 7 or otherwise described herein.

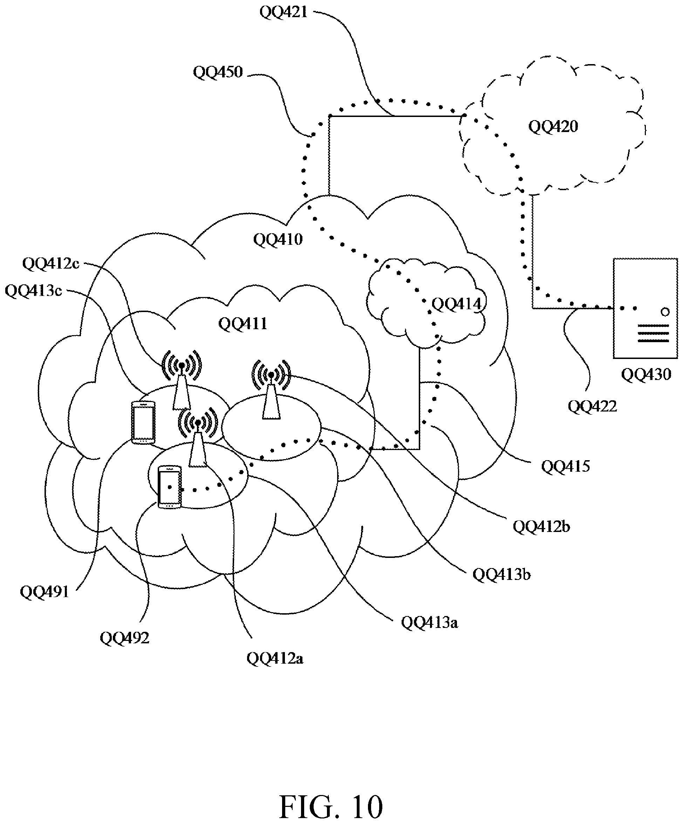

Figure 10 illustrates a telecommunication network connected via an intermediate network to a host computer in accordance with some embodiments.

With reference to Figure 10, in accordance with an embodiment, a communication system includes telecommunication network QQ410, such as a 3GPP-type cellular network, which comprises access network QQ411, such as a radio access network, and core network QQ414. Access network QQ411 comprises a plurality of base stations QQ412a, QQ412b, QQ412c, such as NBs, eNBs, gNBs or other types of wireless access points, each defining a corresponding coverage area QQ413a, QQ413b, QQ413c. Each base station QQ412a, QQ412b, QQ412c is connectable to core network QQ414 over a wired or wireless connection QQ415. A first UE QQ491 located in coverage area QQ413c is configured to wirelessly connect to, or be paged by, the corresponding base station QQ412c. A second UE QQ492 in coverage area QQ413a is wirelessly connectable to the corresponding base station QQ412a. While a plurality of UEs QQ491, QQ492 are illustrated in this example, the disclosed embodiments are equally applicable to a situation where a sole UE is in the coverage area or where a sole UE is connecting to the corresponding base station QQ412.

Telecommunication network QQ410 is itself connected to host computer QQ430, which may be embodied in the hardware and/or software of a standalone server, a cloud-implemented server, a distributed server or as processing resources in a server farm. Host computer QQ430 may be under the ownership or control of a service provider, or may be operated by the service provider or on behalf of the service provider. Connections QQ421 and QQ422 between telecommunication network QQ410 and host computer QQ430 may extend directly from core network QQ414 to host computer QQ430 or may go via an optional intermediate network QQ420. Intermediate network QQ420 may be one of, or a combination of more than one of, a public, private or hosted network; intermediate network QQ420, if any, may be a backbone network or the Internet; in particular, intermediate network QQ420 may comprise two or more sub-networks (not shown).

The communication system of Figure 10 as a whole enables connectivity between the connected UEs QQ491, QQ492 and host computer QQ430. The connectivity may be described as an over-the-top (OTT) connection QQ450. Host computer QQ430 and the connected UEs QQ491, QQ492 are configured to communicate data and/or signaling via OTT connection QQ450, using access network QQ411, core network QQ414, any intermediate network QQ420 and possible further infrastructure (not shown) as intermediaries. OTT connection QQ450 may be transparent in the sense that the participating communication devices through which OTT connection QQ450 passes are unaware of routing of uplink and downlink communications. For example, base station QQ412 may not or need not be informed about the past routing of an incoming downlink communication with data originating from host computer QQ430 to be forwarded (e.g., handed over) to a connected UE QQ491. Similarly, base station QQ412 need not be aware of the future routing of an outgoing uplink communication originating from the UE QQ491 towards the host computer QQ430.

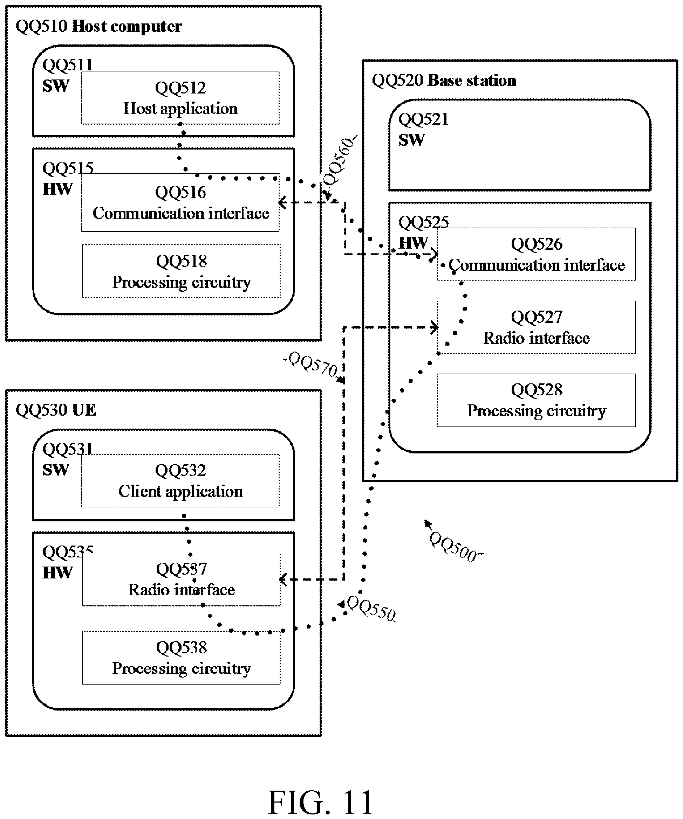

Figure 11 illustrates a host computer communicating via a base station with a user equipment over a partially wireless connection in accordance with some embodiments.

Example implementations, in accordance with an embodiment, of the UE, base station and host computer discussed in the preceding paragraphs will now be described with reference to Figure 11. In communication system QQ500, host computer QQ510 comprises hardware QQ515 including communication interface QQ516 configured to set up and maintain a wired or wireless connection with an interface of a different communication device of communication system QQ500. Host computer QQ510 further comprises processing circuitry QQ518, which may have storage and/or processing capabilities. In particular, processing circuitry QQ518 may comprise one or more programmable processors, application-specific integrated circuits, field programmable gate arrays or combinations of these (not shown) adapted to execute instructions. Host computer QQ510 further comprises software QQ511, which is stored in or accessible by host computer QQ510 and executable by processing circuitry QQ518. Software QQ511 includes host application QQ512. Host application QQ512 may be operable to provide a service to a remote user, such as UE QQ530 connecting via OTT connection QQ550 terminating at UE QQ530 and host computer QQ510. In providing the service to the remote user, host application QQ512 may provide user data which is transmitted using OTT connection QQ550.

Communication system QQ500 further includes base station QQ520 provided in a telecommunication system and comprising hardware QQ525 enabling it to communicate with host computer QQ510 and with UE QQ530. Hardware QQ525 may include communication interface QQ526 for setting up and maintaining a wired or wireless connection with an interface of a different communication device of communication system QQ500, as well as radio interface QQ527 for setting up and maintaining at least wireless connection QQ570 with UE QQ530 located in a coverage area (not shown in Figure 11) served by base station QQ520. Communication interface QQ526 may be configured to facilitate connection QQ560 to host computer QQ510. Connection QQ560 may be direct or it may pass through a core network (not shown in Figure 11) of the telecommunication system and/or through one or more intermediate networks outside the telecommunication system. In the embodiment shown, hardware QQ525 of base station QQ520 further includes processing circuitry QQ528, which may comprise one or more programmable processors, application-specific integrated circuits, field programmable gate arrays or combinations of these (not shown) adapted to execute instructions. Base station QQ520 further has software QQ521 stored internally or accessible via an external connection.

Communication system QQ500 further includes UE QQ530 already referred to. Its hardware QQ535 may include radio interface QQ537 configured to set up and maintain wireless connection QQ570 with a base station serving a coverage area in which UE QQ530 is currently located. Hardware QQ535 of UE QQ530 further includes processing circuitry QQ538, which may comprise one or more programmable processors, application-specific integrated circuits, field programmable gate arrays or combinations of these (not shown) adapted to execute instructions. UE QQ530 further comprises software QQ531, which is stored in or accessible by UE QQ530 and executable by processing circuitry QQ538. Software QQ531 includes client application QQ532. Client application QQ532 may be operable to provide a service to a human or non-human user via UE QQ530, with the support of host computer QQ510. In host computer QQ510, an executing host application QQ512 may communicate with the executing client application QQ532 via OTT connection QQ550 terminating at UE QQ530 and host computer QQ510. In providing the service to the user, client application QQ532 may receive request data from host application QQ512 and provide user data in response to the request data. OTT connection QQ550 may transfer both the request data and the user data. Client application QQ532 may interact with the user to generate the user data that it provides.

It is noted that host computer QQ510, base station QQ520 and UE QQ530 illustrated in Figure 11 may be similar or identical to host computer QQ430, one of base stations QQ412a, QQ412b, QQ412c and one of UEs QQ491, QQ492 of Figure 10, respectively. This is to say, the inner workings of these entities may be as shown in Figure 11 and independently, the surrounding network topology may be that of Figure 10.

In Figure 11, OTT connection QQ550 has been drawn abstractly to illustrate the communication between host computer QQ510 and UE QQ530 via base station QQ520, without explicit reference to any intermediary devices and the precise routing of messages via these devices. Network infrastructure may determine the routing, which it may be configured to hide from UE QQ530 or from the service provider operating host computer QQ510, or both. While OTT connection QQ550 is active, the network infrastructure may further take decisions by which it dynamically changes the routing (e.g., on the basis of load balancing consideration or reconfiguration of the network).

Wireless connection QQ570 between UE QQ530 and base station QQ520 is in accordance with the teachings of the embodiments described throughout this disclosure. One or more of the various embodiments improve the performance of OTT services provided to UE QQ530 using OTT connection QQ550, in which wireless connection QQ570 forms the last segment. More precisely, the teachings of these embodiments may improve security as explained above.

A measurement procedure may be provided for the purpose of monitoring data rate, latency and other factors on which the one or more embodiments improve. There may further be an optional network functionality for reconfiguring OTT connection QQ550 between host computer QQ510 and UE QQ530, in response to variations in the measurement results. The measurement procedure and/or the network functionality for reconfiguring OTT connection QQ550 may be implemented in software QQ511 and hardware QQ515 of host computer QQ510 or in software QQ531 and hardware QQ535 of UE QQ530, or both. In embodiments, sensors (not shown) may be deployed in or in association with communication devices through which OTT connection QQ550 passes; the sensors may participate in the measurement procedure by supplying values of the monitored quantities exemplified above, or supplying values of other physical quantities from which software QQ511, QQ531 may compute or estimate the monitored quantities. The reconfiguring of OTT connection QQ550 may include message format, retransmission settings, preferred routing etc.; the reconfiguring need not affect base station QQ520, and it may be unknown or imperceptible to base station QQ520. Such procedures and functionalities may be known and practiced in the art. In certain embodiments, measurements may involve proprietary UE signaling facilitating host computer QQ510's measurements of throughput, propagation times, latency and the like. The measurements may be implemented in that software QQ511 and QQ531 causes messages to be transmitted, in particular empty or 'dummy' messages, using OTT connection QQ550 while it monitors propagation times, errors etc.

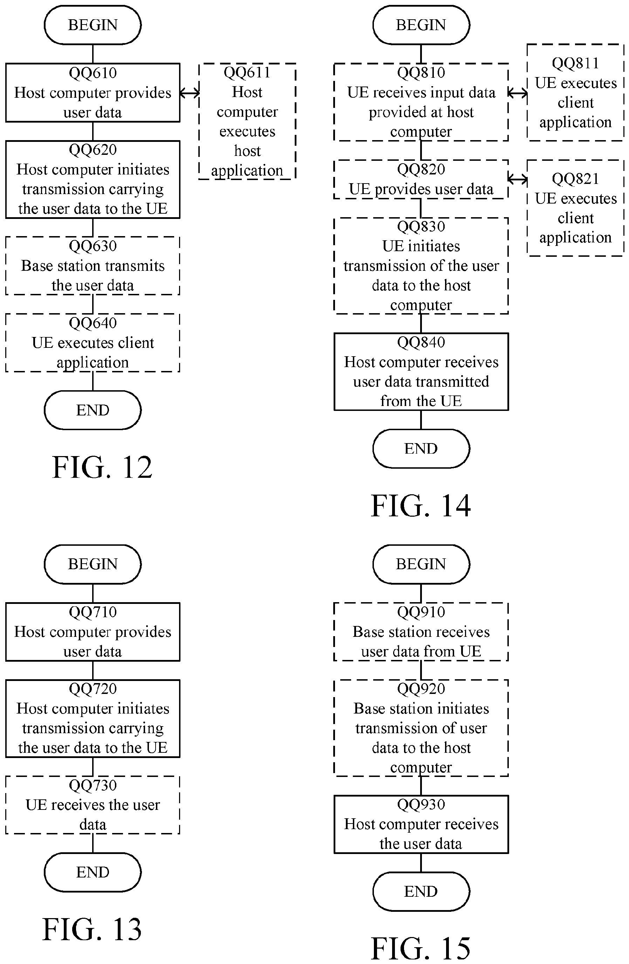

Figure 12 illustrates methods implemented in a communication system including a host computer, a base station and a user equipment in accordance with some embodiments Figure 12 is a flowchart illustrating a method implemented in a communication system, in accordance with one embodiment. The communication system includes a host computer, a base station and a UE which may be those described with reference to Figures 10 and 11. For simplicity of the present disclosure, only drawing references to Figure 12 will be included in this section. In step QQ610, the host computer provides user data. In sub-step QQ611 (which may be optional) of step QQ610, the host computer provides the user data by executing a host application. In step QQ620, the host computer initiates a transmission carrying the user data to the UE. In step QQ630 (which may be optional), the base station transmits to the UE the user data which was carried in the transmission that the host computer initiated, in accordance with the teachings of the embodiments described throughout this disclosure. In step QQ640 (which may also be optional), the UE executes a client application associated with the host application executed by the host computer.

Figure 13 illustrates methods implemented in a communication system including a host computer, a base station and a user equipment in accordance with some embodiments

Figure 13 is a flowchart illustrating a method implemented in a communication system, in accordance with one embodiment. The communication system includes a host computer, a base station and a UE which may be those described with reference to Figures 10 and 11. For simplicity of the present disclosure, only drawing references to Figure 13 will be included in this section. In step QQ710 of the method, the host computer provides user data. In an optional sub-step (not shown) the host computer provides the user data by executing a host application. In step QQ720, the host computer initiates a transmission carrying the user data to the UE. The transmission may pass via the base station, in accordance with the teachings of the embodiments described throughout this disclosure. In step QQ730 (which may be optional), the UE receives the user data carried in the transmission.

Figure 14 illustrates methods implemented in a communication system including a host computer, a base station and a user equipment in accordance with some embodiments

Figure 14 is a flowchart illustrating a method implemented in a communication system, in accordance with one embodiment. The communication system includes a host computer, a base station and a UE which may be those described with reference to Figures 10 and 11. For simplicity of the present disclosure, only drawing references to Figure 14 will be included in this section. In step QQ810 (which may be optional), the UE receives input data provided by the host computer. Additionally or alternatively, in step QQ820, the UE provides user data. In sub-step QQ821 (which may be optional) of step QQ820, the UE provides the user data by executing a client application. In sub-step QQ811 (which may be optional) of step QQ810, the UE executes a client application which provides the user data in reaction to the received input data provided by the host computer. In providing the user data, the executed client application may further consider user input received from the user. Regardless of the specific manner in which the user data was provided, the UE initiates, in sub-step QQ830 (which may be optional), transmission of the user data to the host computer. In step QQ840 of the method, the host computer receives the user data transmitted from the UE, in accordance with the teachings of the embodiments described throughout this disclosure.

Figure 15 illustrates methods implemented in a communication system including a host computer, a base station and a user equipment in accordance with some embodiments

Figure 15 is a flowchart illustrating a method implemented in a communication system, in accordance with one embodiment. The communication system includes a host computer, a base station and a UE which may be those described with reference to Figures 10 and 11. For simplicity of the present disclosure, only drawing references to Figure 15 will be included in this section. In step QQ910 (which may be optional), in accordance with the teachings of the embodiments described throughout this disclosure, the base station receives user data from the UE. In step QQ920 (which may be optional), the base station initiates transmission of the received user data to the host computer. In step QQ930 (which may be optional), the host computer receives the user data carried in the transmission initiated by the base station.

Generally, all terms used herein are to be interpreted according to their ordinary meaning in the relevant technical field, unless a different meaning is clearly given and/or is implied from the context in which it is used.

Reference has been made herein to various embodiments. However, a person skilled in the art would recognize numerous variations to the described embodiments that would still fall within the scope of the claims.

For example, the method embodiments described herein discloses example methods through steps being performed in a certain order. However, it is recognized that these sequences of events may take place in another order without departing from the scope of the claims. Furthermore, some method steps may be performed in parallel even though they have been described as being performed in sequence. Thus, the steps of any methods disclosed herein do not have to be performed in the exact order disclosed, unless a step is explicitly described as following or preceding another step and/or where it is implicit that a step must follow or precede another step.

In the same manner, it should be noted that in the description of embodiments, the partition of functional blocks into particular units is by no means intended as limiting. Contrarily, these partitions are merely examples. Functional blocks described herein as one unit may be split into two or more units. Furthermore, functional blocks described herein as being implemented as two or more units may be merged into fewer (e.g. a single) unit.

Any feature of any of the embodiments disclosed herein may be applied to any other embodiment, wherever suitable. Likewise, any advantage of any of the embodiments may apply to any other embodiments, and vice versa.

Hence, it should be understood that the details of the described embodiments are merely examples brought forward for illustrative purposes, and that all variations that fall within the scope of the claims are intended to be embraced therein.

## Claims

1. A method of establishing a session key at a communication device, wherein the session key is to be shared between the communication device and a network application function, NAF, and
wherein a service bootstrap key and an associated transaction identifier, previously derived by application of a general bootstrapping architecture, GBA, procedure, are shared between the communication device and a bootstrapping server function, BSF,
the method being performed at the communication device and comprising:
acquiring (310) a NAF identifier associated with the NAF;
deriving (320) a NAF specific key based on the NAF identifier and the service bootstrap key;
deriving (330) the session key based on the NAF specific key and one or more key defining parameters, wherein the key defining parameters are accessible by the communication device and by the NAF and are non-accessible by the BSF, wherein the one or more key defining parameters includes conditions of a radio link between the communication device and an access point of the NAF; and
transmitting (340) an attach request message and the transaction identifier towards the NAF for establishment of the session key at the NAF.

2. The method of claim 1 further comprising receiving (350) an attach response message from the NAF, thereby establishing a communication session based on the session key.

3. The method of claim 2 further comprising, during the established communication session, deriving a new service bootstrap key and an associated new transaction identifier, to be shared between the communication device and the BSF, by re-applying (360) the GBA procedure.

4. The method of claim 3 further comprising discarding (370) the service bootstrap key and the associated transaction identifier previously derived.

5. The method of claim 3 further comprising continuously maintaining (370) the service bootstrap key and the associated transaction identifier previously derived.

6. The method of any of claims 2 through 5 further comprising discarding (380) the session key when the communication session is terminated.

7. A method of establishing a session key at a network application function, NAF, wherein the session key is to be shared between a communication device and the NAF, and
wherein a service bootstrap key and an associated transaction identifier, previously derived by application of a general bootstrapping architecture, GBA, procedure, are shared between the communication device and a bootstrapping server function, BSF,
the method being performed by the NAF and comprising:
receiving (410) an attach request message and the transaction identifier from the communication device;
transmitting (420) the transaction identifier and a NAF identifier associated with the NAF towards the BSF;
in response thereto, receiving (430) a NAF specific key from the BSF, wherein the NAF specific key is based on the NAF identifier and the service bootstrap key; and
deriving (440) the session key based on the NAF specific key and one or more key defining parameters, wherein the key defining parameters are accessible by the communication device and by the NAF and are non-accessible by the BSF, wherein the one or more key defining parameters includes conditions of a radio link between the communication device and an access point of the NAF.

8. The method of claim 7 further comprising transmitting (450) an attach response message towards the communication device, thereby establishing a communication session based on the session key.

9. The method of claim 8 further comprising discarding (460) the session key when the communication session is terminated.

10. An apparatus for establishment of a session key at a communication device, the session key to be shared between the communication device and a network application function, NAF,
wherein a service bootstrap key and an associated transaction identifier, previously derived by application of a general bootstrapping architecture, GBA, procedure, are meh shared between the communication device and a bootstrapping server function, BSF,
the apparatus comprising a controller (811) configured to cause:
acquisition of a NAF identifier associated with the NAF;
derivation of a NAF specific key based on the NAF identifier and the service bootstrap key;
derivation of the session key based on the NAF specific key and one or more key defining parameters, wherein the key defining parameters are accessible by the communication device and by the NAF and are non-accessible by the BSF, wherein the one or more key defining parameters includes conditions of a radio link between the communication device and an access point of the NAF; and
transmission of an attach request message and the transaction identifier towards the NAF for establishment of the session key at the NAF.

11. The apparatus of claim 10 wherein the controller is further configured to cause reception of an attach response message from the NAF, and thereby establishment of a communication session based on the session key.

12. The apparatus of claim 11 wherein the controller is further configured to cause, during the established communication session, derivation of a new service bootstrap key and an associated new transaction identifier, to be shared between the communication device and the BSF, by re-application of the GBA procedure.

13. The apparatus of claim 12 wherein the controller is further configured to cause discardment of the service bootstrap key and the associated transaction identifier previously derived.

14. The apparatus of claim 12 wherein the controller is further configured to cause continuous maintenance of the service bootstrap key and the associated transaction identifier previously derived.

15. The apparatus of any of claims 11 through 14 wherein the controller is further configured to cause discardment of the session key responsive to termination of the communication session.

16. A communication device comprising the apparatus of any of claims 10 through 15.

17. An apparatus for establishment of a session key at a network application function, NAF,
the session key to be shared between a communication device and the NAF,
wherein a service bootstrap key and an associated transaction identifier, previously derived by application of a general bootstrapping architecture, GBA, procedure, are shared between the communication device and a bootstrapping server, BSF,
the apparatus comprising a controller (821) configured to cause:
reception of an attach request message and the transaction identifier from the communication device;
transmission of the transaction identifier and a NAF identifier associated with the NAF towards the BSF;
in response thereto, reception of a NAF specific key from the BSF, wherein the NAF specific key is based on the NAF identifier and the service bootstrap key; and
derivation of the session key based on the NAF specific key and one or more key defining parameters, wherein the key defining parameters are accessible by the communication device and by the NAF and are non-accessible by the BSF, wherein the one or more key defining parameters includes conditions of a radio link between the communication device and an access point of the NAF.

18. The apparatus of claim 17 wherein the controller is further configured to cause transmission of an attach response message towards the communication device, and thereby establishment of a communication session based on the session key.

19. The apparatus of claim 18 wherein the controller is further configured to cause discardment of the session key responsive to termination of the communication session.

20. An access network node configured to implement a network application function, NAF, and comprising the apparatus of any of claims 17 through 19.

## Patentansprüche

1. Verfahren zum Herstellen eines Sitzungsschlüssels auf einer Kommunikationsvorrichtung, wobei der Sitzungsschlüssel zwischen der Kommunikationsvorrichtung und einer Netzwerkanwendungsfunktion, NAF, gemeinsam genutzt werden soll, und
wobei ein Dienst-Bootstrap-Schlüssel und eine zugeordnete Transaktionskennung, die zuvor durch Anwendung eines allgemeinen Bootstrapping-Architektur-Vorgangs, GBA-Vorgang, abgeleitet wurden, zwischen der Kommunikationsvorrichtung und einer Bootstrapping-Server-Funktion, BSF, gemeinsam genutzt werden,
wobei das Verfahren an der Kommunikationsvorrichtung ausgeführt wird und umfassend:
Erfassen (310) einer NAF-Kennung, die der NAF zugeordnet ist;
Ableiten (320) eines NAF-spezifischen Schlüssels basierend auf der NAF-Kennung und dem Dienst-Bootstrap-Schlüssel;
Ableiten (330) des Sitzungsschlüssels basierend auf dem NAF-spezifischen Schlüssel und einem oder mehreren schlüsseldefinierenden Parametern, wobei die schlüsseldefinierenden Parameter durch die Kommunikationsvorrichtung und durch die NAF zugänglich und durch die BSF nicht zugänglich sind, wobei der eine oder die mehreren schlüsseldefinierenden Parameter Bedingungen einer Funkverbindung zwischen der Kommunikationsvorrichtung und einem Zugriffspunkt der NAF einschließen; und
Übertragen (340) einer Anfügeanforderungsnachricht und der Transaktionskennung an die NAF für die Herstellung des Sitzungsschlüssels bei der NAF.

2. Verfahren nach Anspruch 1, ferner umfassend ein Empfangen (350) einer Anfügeantwortnachricht von der NAF, wodurch eine Kommunikationssitzung basierend auf dem Sitzungsschlüssel hergestellt wird.

3. Verfahren nach Anspruch 2, ferner umfassend, während der hergestellten Kommunikationssitzung, das Ableiten eines neuen Dienst-Bootstrap-Schlüssels und einer zugeordneten neuen Transaktionskennung, die zwischen der Kommunikationsvorrichtung und der BSF gemeinsam genutzt werden sollen, durch erneutes Anwenden (360) des GBA-Vorgangs.

4. Verfahren nach Anspruch 3, ferner umfassend ein Verwerfen (370) des Dienst-Bootstrap-Schlüssels und der zugeordneten Transaktionskennung, die zuvor abgeleitet wurde.

5. Verfahren nach Anspruch 3, ferner umfassend ein kontinuierliches Aufrechterhalten (370) des Dienst-Bootstrap-Schlüssels und der zugeordneten Transaktionskennung, die zuvor abgeleitet wurde.

6. Verfahren nach einem der Ansprüche 2 bis einschließlich 5, ferner umfassend das Verwerfen (380) des Sitzungsschlüssels, wenn die Kommunikationssitzung beendet wird.

7. Verfahren zum Herstellen eines Sitzungsschlüssels auf einer Netzwerkanwendungsfunktion, NAF, wobei der Sitzungsschlüssel zwischen einer Kommunikationsvorrichtung und der NAF gemeinsam genutzt werden soll, und
wobei ein Dienst-Bootstrap-Schlüssel und eine zugeordnete Transaktionskennung, die zuvor durch Anwendung eines allgemeinen Bootstrapping-Architektur-Vorgangs, GBA-Vorgang, abgeleitet wurden, zwischen der Kommunikationsvorrichtung und einer Bootstrapping-Server-Funktion, BSF, gemeinsam genutzt werden,
wobei das Verfahren durch die NAS durchgeführt wird und umfassend:
Empfangen (410) einer Anfügeanforderungsnachricht und der Transaktionskennung von der Kommunikationsvorrichtung;
Übertragen (420) der Transaktionskennung und einer NAF-Kennung, die der NAF zugeordnet ist, an die BSF;
als Reaktion darauf, Empfangen (430) eines NAF-spezifischen Schlüssels von der BSF, wobei der NAF-spezifische Schlüssel auf der NAF-Kennung und dem Dienst-Bootstrap-Schlüssel basiert; und
Ableiten (440) des Sitzungsschlüssels basierend auf dem NAF-spezifischen Schlüssel und einem oder mehreren schlüsseldefinierenden Parametern, wobei die schlüsseldefinierenden Parameter durch die Kommunikationsvorrichtung und durch die NAF zugänglich und durch die BSF nicht zugänglich sind, wobei der eine oder die mehreren schlüsseldefinierenden Parameter Bedingungen einer Funkverbindung zwischen der Kommunikationsvorrichtung und einem Zugriffspunkt der NAF einschließen.

8. Verfahren nach Anspruch 7, ferner umfassend das Übertragen (450) einer Anfügeantwortnachricht an die Kommunikationsvorrichtung, wodurch eine Kommunikationssitzung basierend auf dem Sitzungsschlüssel hergestellt wird.

9. Verfahren nach Anspruch 8, ferner umfassend das Verwerfen (460) des Sitzungsschlüssels, wenn die Kommunikationssitzung beendet wird.

10. Einrichtung zum Herstellen eines Sitzungsschlüssels auf einer Kommunikationsvorrichtung, wobei der Sitzungsschlüssel zwischen der Kommunikationsvorrichtung und einer Netzwerkanwendungsfunktion, NAF, gemeinsam genutzt werden soll,
wobei ein Dienst-Bootstrap-Schlüssel und eine zugeordnete Transaktionskennung, die zuvor durch Anwendung eines allgemeinen Bootstrapping-Architektur-Vorgangs, GBA-Vorgang, abgeleitet wurden, und zwischen der Kommunikationsvorrichtung und einer Bootstrapping-Server-Funktion, BSF, gemeinsam genutzt,
wobei die Einrichtung eine Steuerung (811) umfasst, die konfiguriert ist, um zu bewirken:
Erwerb einer NAF-Kennung, die der NAF zugeordnet ist;
Ableitung eines NAF-spezifischen Schlüssels basierend auf der NAF-Kennung und dem Dienst-Bootstrap-Schlüssel;
Ableitung des Sitzungsschlüssels basierend auf dem NAF-spezifischen Schlüssel und einem oder mehreren schlüsseldefinierenden Parametern, wobei die schlüsseldefinierenden Parameter durch die Kommunikationsvorrichtung und durch die NAF zugänglich und durch die BSF nicht zugänglich sind, wobei der eine oder die mehreren schlüsseldefinierenden Parameter Bedingungen einer Funkverbindung zwischen der Kommunikationsvorrichtung und einem Zugriffspunkt der NAF einschließen; und
Übermittlung einer Anfügeantwortnachricht und der Transaktionskennung an die NAF für die Herstellung des Sitzungsschlüssels auf der NAF.

11. Einrichtung nach Anspruch 10, wobei die Steuerung ferner konfiguriert ist, um einen Empfang einer Anfügeantwortnachricht von der NAF zu veranlassen und dadurch die Herstellung einer Kommunikationssitzung basierend auf dem Sitzungsschlüssel.

12. Einrichtung nach Anspruch 11, wobei die Steuerung ferner konfiguriert ist, um während der hergestellten Kommunikationssitzung die Ableitung eines neuen Dienst-Bootstrap-Schlüssels und einer zugeordneten neuen Transaktionskennung zu veranlassen, die zwischen der Kommunikationsvorrichtung und der BSF gemeinsam genutzt werden sollen, durch erneute Anwendung des GBA-Vorgangs.

13. Einrichtung nach Anspruch 12, wobei die Steuerung ferner konfiguriert ist, um das Verwerfen des Dienst-Bootstrap-Schlüssels und der zugeordneten Transaktionskennung zu veranlassen, die zuvor abgeleitet wurde.

14. Einrichtung nach Anspruch 12, wobei die Steuerung ferner konfiguriert ist, um eine kontinuierliche Aufrechterhaltung des Dienst-Bootstrap-Schlüssels und der zugeordneten Transaktionskennung zu veranlassen, die zuvor abgeleitet wurde.

15. Einrichtung nach einem der Ansprüche 11 bis einschließlich 14, wobei die Steuerung ferner konfiguriert ist, um als Reaktion auf die Beendigung der Kommunikationssitzung das Verwerfen des Sitzungsschlüssels zu veranlassen.

16. Kommunikationsvorrichtung, umfassend die Einrichtung nach einem der Ansprüche 10 bis einschließlich 15.

17. Einrichtung für die Herstellung eines Sitzungsschlüssels auf einer Netzwerkanwendungsfunktion, NAF, wobei der Sitzungsschlüssel zwischen einer Kommunikationsvorrichtung und der NAF gemeinsam genutzt werden soll, wobei ein Dienst-Bootstrap-Schlüssel und eine zugeordnete Transaktionskennung, die zuvor durch Anwendung eines allgemeinen Bootstrapping-Architektur-Vorgangs, GBA-Vorgang, abgeleitet wurden, zwischen der Kommunikationsvorrichtung und einem Bootstrapping-Server, BSF, gemeinsam genutzt werden,
die Einrichtung umfassend eine Steuerung (821), die konfiguriert ist, um zu bewirken:
Empfang einer Anfügeanforderungsnachricht und der Transaktionskennung von der Kommunikationsvorrichtung;
Übertragung der Transaktionskennung und einer NAF-Kennung, die der NAF zugeordnet ist, an eine Bootstrapping-Server-Funktion, BSF;
als Reaktion darauf, Empfang eines NAF-spezifischen Schlüssels von der BSF, wobei der NAF-spezifische Schlüssel auf der NAF-Kennung und dem Dienst-Bootstrap-Schlüssel basiert; und
Ableitung des Sitzungsschlüssels basierend auf dem NAF-spezifischen Schlüssel und einem oder mehreren schlüsseldefinierenden Parametern, wobei die schlüsseldefinierenden Parameter durch die Kommunikationsvorrichtung und durch die NAF zugänglich und durch die BSF nicht zugänglich sind, wobei der eine oder die mehreren schlüsseldefinierenden Parameter Bedingungen einer Funkverbindung zwischen der Kommunikationsvorrichtung und einem Zugriffspunkt der NAF einschließen.

18. Einrichtung nach Anspruch 17, wobei die Steuerung ferner konfiguriert ist, um die Übertragung einer Anfügeantwortnachricht an die Kommunikationsvorrichtung zu veranlassen und dadurch Herstellung einer Kommunikationssitzung basierend auf dem Sitzungsschlüssel.

19. Einrichtung nach Anspruch 18, wobei die Steuerung ferner konfiguriert ist, um als Reaktion auf die Beendigung der Kommunikationssitzung das Verwerfen des Sitzungsschlüssels zu veranlassen.

20. Zugangsnetzwerkknoten, der konfiguriert ist, um eine Netzwerkanwendungsfunktion, NAF, zu implementieren und umfassend die Einrichtung nach einem der Ansprüche 17 bis einschließlich 19.

## Revendications

1. Procédé d'établissement d'une clé de session au niveau d'un dispositif de communication, dans lequel la clé de session doit être partagée entre le dispositif de communication et une fonction d'application réseau, NAF, et
dans lequel une clé d'amorçage de service et un identificateur de transaction associé, précédemment dérivés par application d'une procédure d'architecture d'amorçage générale, GBA, sont partagés entre le dispositif de communication et une fonction de serveur d'amorçage, BSF,
le procédé étant mis en oeuvre au niveau du dispositif de communications et comprenant :
l'acquisition (310) d'un identificateur de NAF associé à la NAF ;
la dérivation (320) d'une clé spécifique à la NAF en fonction de l'identificateur de NAF et de la clé d'amorçage de service ;
la dérivation (330) de la clé de session en fonction de la clé spécifique à la NAF et d'un ou plusieurs paramètres de définition de clé, dans lequel les paramètres de définition de clé sont accessibles par le dispositif de communication et par la NAF et sont non accessibles par la BSF, dans lequel le ou les paramètres de définition de clé comportent des conditions d'une liaison radio entre le dispositif de communication et un point d'accès de la NAF ; et
la transmission (340) d'un message de demande de rattachement et de l'identificateur de transaction vers la NAF pour établissement de la clé de session au niveau de la NAF.

2. Procédé selon la revendication 1 comprenant en outre la réception (350) d'un message de réponse de rattachement en provenance de la NAF, établissant de ce fait une session de communication en fonction de la clé de session.

3. Procédé selon la revendication 2 comprenant en outre, pendant la session de communication établie, la dérivation d'une nouvelle clé d'amorçage de service et d'un nouvel identificateur de transaction associé, à partager entre le dispositif de communication et la BSF, en réappliquant (360) la procédure GBA.

4. Procédé selon la revendication 3 comprenant en outre la mise à l'écart (370) de la clé d'amorçage de service et de l'identificateur de transaction associé précédemment dérivés.

5. Procédé selon la revendication 3 comprenant en outre la conservation continue (370) de la clé d'amorçage de service et de l'identificateur de transaction associé précédemment dérivés.

6. Procédé selon l'une quelconque des revendications 2 à 5 comprenant en outre la mise à l'écart (380) de la clé de session lorsque la session de communication est achevée.

7. Procédé d'établissement d'une clé de session au niveau d'une fonction d'application réseau, NAF, dans lequel la clé de session doit être partagée entre un dispositif de communication et la NAF, et
dans lequel une clé d'amorçage de service et un identificateur de transaction associé, précédemment dérivés par application d'une procédure d'architecture d'amorçage générale, GBA, sont partagés entre le dispositif de communication et une fonction de serveur d'amorçage, BSF,
le procédé étant mis en oeuvre par le NAS et comprenant :
la réception (410) d'un message de demande de rattachement et de l'identificateur de transaction en provenance du dispositif de communication ;
la transmission (420) de l'identificateur de transaction et d'un identificateur de NAF associé à la NAF vers la BSF ;
en réponse à celle-ci, la réception (430) d'une clé spécifique à la NAF en provenance de la BSF, dans lequel la clé spécifique à la NAF est en fonction de l'identificateur de NAF et de la clé d'amorçage de service ; et
la dérivation (440) de la clé de session en fonction de la clé spécifique à la NAF et d'un ou plusieurs paramètres de définition de clé, dans lequel les paramètres de définition de clé sont accessibles par le dispositif de communication et par la NAF et sont non accessibles par la BSF, dans lequel le ou les paramètres de définition de clé comportent des conditions d'une liaison radio entre le dispositif de communication et un point d'accès de la NAF.

8. Procédé selon la revendication 7 comprenant en outre la transmission (450) d'un message de réponse de rattachement vers le dispositif de communication, établissant de ce fait une session de communication en fonction de la clé de session.

9. Procédé selon la revendication 8 comprenant en outre la mise à l'écart (460) de la clé de session lorsque la session de communication est achevée.

10. Appareil destiné à l'établissement d'une clé de session au niveau d'un dispositif de communication, la clé de session devant être partagée entre le dispositif de communication et une fonction d'application réseau, NAF,
dans lequel une clé d'amorçage de service et un identificateur de transaction associé, précédemment dérivés par application d'une procédure d'architecture d'amorçage générale, GBA, et partagés entre le dispositif de communication et une fonction de serveur d'amorçage, BSF,
l'appareil comprenant un dispositif de commande (811) configuré pour amener :
l'acquisition d'un identificateur de NAF associé à la NAF ;
la dérivation d'une clé spécifique à la NAF en fonction de l'identificateur de NAF et de la clé d'amorçage de service ;
la dérivation de la clé de session en fonction de la clé spécifique à la NAF et d'un ou plusieurs paramètres de définition de clé, dans lequel les paramètres de définition de clé sont accessibles par le dispositif de communication et par la NAF et sont non accessibles par la BSF, dans lequel le ou les paramètres de définition de clé comportent des conditions d'une liaison radio entre le dispositif de communication et un point d'accès de la NAF ; et
la transmission d'un message de demande de rattachement et de l'identificateur de transaction vers la NAF pour établissement de la clé de session au niveau de la NAF.

11. Appareil selon la revendication 10 dans lequel le dispositif de commande est configuré en outre pour amener la réception d'un message de réponse de rattachement en provenance de la NAF, et l'établissement de ce fait d'une session de communication en fonction de la clé de session.

12. Appareil selon la revendication 11 dans lequel le dispositif de commande est configuré en outre pour amener, pendant la session de communication établie, la dérivation d'une nouvelle clé d'amorçage de service et d'un nouvel identificateur de transaction associé, à partager entre le dispositif de communication et la BSF, par réapplication de la procédure GBA.

13. Appareil selon la revendication 12 dans lequel le dispositif de commande est configuré en outre pour amener la mise à l'écart de la clé d'amorçage de service et de l'identificateur de transaction associé précédemment dérivés.

14. Appareil selon la revendication 12 dans lequel le dispositif de commande est configuré en outre pour amener la conservation continue de la clé d'amorçage de service et de l'identificateur de transaction associé précédemment dérivés.

15. Appareil selon l'une quelconque des revendications 11 à 14 dans lequel le dispositif de commande est configuré en outre pour amener la mise à l'écart de la clé de session en réponse à l'achèvement de la session de communication.

16. Dispositif de communication comprenant l'appareil selon l'une quelconque des revendications 10 à 15.

17. Appareil destiné à l'établissement d'une clé de session au niveau d'une fonction d'application réseau, NAF, la clé de session devant être partagée entre un dispositif de communication et la NAF, dans lequel une clé d'amorçage de service et un identificateur de transaction associé, précédemment dérivés par application d'une procédure d'architecture d'amorçage générale, GBA, sont partagés entre le dispositif de communication et un serveur d'amorçage, BSF,
l'appareil comprenant un dispositif de commande (821) configuré pour amener :
la réception d'un message de demande de rattachement et de l'identificateur de transaction en provenance du dispositif de communication ;
la transmission de l'identificateur de transaction et d'un identificateur de NAF associé à la NAF vers une fonction de serveur d'amorçage, BSF ;
en réponse à celle-ci, la réception d'une clé spécifique à la NAF en provenance de la BSF, dans lequel la clé spécifique à la NAF est en fonction de l'identificateur de NAF et de la clé d'amorçage de service ; et
la dérivation de la clé de session en fonction de la clé spécifique à la NAF et d'un ou plusieurs paramètres de définition de clé, dans lequel les paramètres de définition de clé sont accessibles par le dispositif de communication et par la NAF et sont non accessibles par la BSF, dans lequel le ou les paramètres de définition de clé comportent des conditions d'une liaison radio entre le dispositif de communication et un point d'accès de la NAF.

18. Appareil selon la revendication 17 dans lequel le dispositif de commande est configuré en outre pour amener la transmission d'un message de réponse de rattachement vers le dispositif de communication, et l'établissement de ce fait d'une session de communication en fonction de la clé de session.

19. Appareil selon la revendication 18 dans lequel le dispositif de commande est configuré en outre pour amener la mise à l'écart de la clé de session en réponse à l'achèvement de la session de communication.

20. Noeud de réseau d'accès configuré pour implémenter une fonction d'application réseau, NAF, et comprenant l'appareil selon l'une quelconque des revendications 17 à 19.
